# EUROPÄISCHE PATENTSCHRIFT

(11) **EP 1 946 899 B1**
(45) Veröffentlichungstag und Bekanntmachung des Hinweises auf die Patenterteilung: **16.06.2010**
(21) Anmeldenummer: 07000797.6
(22) Anmeldetag: 16.01.2007
(51) Int. Cl.: B27G 19/00, A41D 13/00, B27B 17/08, F16P 3/12, A41D 31/00

(54) **Kettensäge und Schnittschutzkleidung**
Chain saw and cut protective clothing
Scie à chaîne et vêtement de protection contre les coupures

(43) Veröffentlichungstag der Anmeldung: 23.07.2008
(73) Patentinhaber: Grote, Frederik, 48268 Greven (DE); Schlamann, Klaus, 49170 Hagen im T.W. (DE); Wolfert, Patrick, 48268 Greven (DE); Hermes Schleifmittel GmbH & Co. KG, 22547 Hamburg (DE)
(72) Erfinder: Grote, Frederik, 48268 Greven (DE); Jander, Lothar B., Dr., 49326 Melle (DE); Schlamann, Klaus, 49170 Hagen im T.W. (DE); Wolfert, Patrick, 48268 Greven (DE); Gerhard Struth, 22547 Hamburg (DE)
(74) Vertreter: Glawe, Delfs, Moll

(56) Entgegenhaltungen:
- DE-U1- 8 623 035
- DE-U1- 9 000 157
- FR-A1- 2 739 759
- GB-A- 2 226 943
- US-A- 4 351 065
- US-A1- 2004 181 951

## Beschreibung

Gegenstand der Erfindung ist eine Kettensäge mit einer Antriebseinrichtung sowie eine Schnittschutzkleidung.

Motorbetriebene Kettensägen finden vielfach Einsatz beispielsweise in der Land- und Forstwirtschaft, im Gartenbau und bei Rettungsdiensten. Da es sich um ein gefährliches Arbeitsgerät handelt, sind im Stand der Technik aktive und passive Sicherheitsvorkehrungen bekannt. Bei den aktiven Sicherheitseinrichtungen handelt es sich insbesondere um Vorrichtungen, die beim Vorliegen bestimmter Betriebssituationen den Antrieb stoppen bzw. auskuppeln und/oder die Kette bremsen. Kettensägen sind häufig beidhändig zu bedienen und der Kettenantrieb wird gestoppt bzw. die Kette gebremst, wenn eine Hand von dem zugehörigen Bedienelement gelöst wird.

Bei den passiven Sicherheitsvorkehrungen handelt es sich insbesondere um Kleidung mit Schnittschutzeinlagen, insbesondere Schnittschutzhosen. Solche Schnittschutzkleidung ist beispielsweise aus DE 8623035 U1 bekannt. Trifft eine laufende Kettensäge auf die Schnittschutzkleidung, werden Bestandteile des Schnittschutzes (beispielsweise ein Fasergewirke) mitgenommen und bremsen die Kette ab.

DE-U-9000157 offenbart eine Kombination aus Schnittschutzkleidung und Kettensäge, wobei bei Kontakt zwischen elektrisch leitender Schutzkleidung und Sägekette ein Stromkreis geschlossen und ein Stoppsignal ausgelöst wird.

Der Erfindung liegt die Aufgabe zugrunde, eine Kettensäge sowie eine Schnittschutzkleidung zu schaffen, die ein höheres Maß an Sicherheit gegenüber Schnittverletzungen bieten.

Die Kettensäge weist erfindungsgemäß folgendes auf:
a. wenigstens einen Sensor (5), der zur unmittelbaren Detektion der Mitnahme von Detektionselementen der Schnittschutzkleidung des Benutzers durch die Kette (2) ausgebildet ist,
b. eine Einrichtung zum Stoppen der Antriebseinrichtung und/oder eine Kettenbremse, die durch den Sensor auslösbar ist.

Zunächst seien einige im Rahmen der Erfindung verwendete Begriffe erläutert. Erfindungsgemäß ist ein Sensor vorgesehen, der zur Detektion der Mitnahme von Material einer Schnittschutzkleidung des Benutzers durch die Kette ausgebildet ist. Trifft die laufende Kette auf die Schnittschutzausrüstung (Schnittschutzkleidung), wird sie dort Material abtragen, das von der laufenden Kette mitgenommen wird. Der Sensor ist zur unmittelbaren Detektion dieses Material selbst ausgebildet.

Bei der Einrichtung zum Stoppen der Antriebseinrichtung bzw. der Kettenbremse kann es sich um eine herkömmliche und dem Stand der Technik bekannte Kettenbremse handeln, die die laufende Kette schnellstmöglich stoppt und dabei die kinetische Energie der laufenden Kette vernichtet bzw. in Wärme umsetzt. Ferner kann eine Auskupplung bzw. Abschaltung des Antriebs vorgesehen sein, beispielsweise eine Zündabschaltung eines Verbrennungsmotors.

Kern der Erfindung ist es, dass das Stoppen der Kette ausgelöst wird durch die Mitnahme von Material der Schnittschutzkleidung. Diese Schnittschutzkleidung hat im Rahmen der Erfindung somit einen doppelten Effekt. Zum einen schützt sie auf im Stand der Technik bekannte Weise passiv gegen die mechanische Einwirkung der Kettensäge und vernichtet einen Teil der Energie durch insbesondere Abtrag von Material aus der Schnittschutzschicht. Zum anderen ist sie Bestandteil eines aktiven Schutzsystems, bei dem das Auftreffen der Kette auf die Schnittschutzkleidung und die beginnende Mitnahme von Material aus dieser Ausrüstung die Kettensäge aktiv abschaltet und/oder bremst, unabhängig davon, ob der Benutzer eine solche Abschaltung auslöst oder gegebenenfalls wenigstens eine Hand von den Bedienelementen löst und dadurch eine Abschaltung bewirkt.

Der Sensor ist zur Detektion der Mitnahme von Detektionselementen der Schnittschutzkleidung durch die Kette ausgebildet. Bei solchen Detektionselementen handelt es sich um Bestandteile der Schnittschutzkleidung, die nicht primär dem passiven mechanischen Schutz vor einer Schnitteinwirkung dienen, sondern die vorzugsweise leicht von der Schnittschutzkleidung ablösbar sind und durch die Kette mitgenommen werden können. Auf diese Art und Weise sollen möglichst schnell nach dem Auftreffen einer laufenden Kette auf die Schnittschutzausrüstung Detektionselemente abgelöst und durch den Sensor detektierbar werden.

Der Sensor ist erfindungsgemäß zur unmittelbaren Detektion des durch die Kette mitgenommenen Materials der Schnittschutzkleidung ausgebildet. "Unmittelbar" bedeutet im Rahmen der Erfindung, dass das Material selbst bzw. charakteristische Eigenschaften dieses mitgenommenen Materials ein Sensorsignal auslösen. Der Sensor kann dabei im Maschineninneren angeordnet sein, da das Detektionsmaterial von der Kette mitgenommen und damit auch in das Maschineninnere eingetragen (und an einem dort angeordneten Sensor vorbeigetragen) wird.

Der Sensor kann insbesondere zur Detektion von mechanischen, elektrischen und/oder optischen Eigenschaften des durch die Kette mitgenommenen Materials der Schnittschutzkleidung ausgebildet sein. Vorzugsweise ist er ausgewählt, aus der Gruppe bestehend aus Farbsensoren, Helligkeitssensoren, W-Sensoren, Induktivitätssensoren, Kapazitätssensoren, Leitfähigkeitsensoren und mechanischen Sensoren zur Detektion der Mitnahme von Fasermaterial durch die Kette.

Ein Farbsensor kann zur Detektion einer definierten Farbe ausgebildet sein. Die Schnittschutzkleidung kann Detektionsmaterial mit definierten Reflektionseigenschaften bzw. einer definierten Farbe enthalten. Im Inneren der Kettensäge kann sich eine Lichtquelle (beispielsweise eine LED) und ein optischer Farbsensor befinden, der die Reflektion eines bestimmten Bereiches der Kette misst. Der Sensor kann beispielsweise mithilfe geeigneter Filtereinrichtungen eine spektrale Empfindlichkeit aufweisen, die nur bei Auftreffen eines bestimmten Wellenlängenbereiches (entsprechend des reflektierten Hauptwellenlängenbereiches des farbigen Materials) zu einem Überschreiten der Signalschwelle des Sensors und damit einem Auslösens des Notstopps führt. Die Detektionselemente können in diesem Fall beispielsweise ein farbiges Fasergewirke sein, das beim Auftreffen der Kette auf den Schnittschutz erfasst und in die Kettensäge eingezogen wird. Durch dieses Material ändert sich die Wellenlängenverteilung des zum Farbsensor hin reflektierten Lichtes, so dass die Signalschwelle im entsprechenden Wellenlängenbereich überschritten und die Bremsung ausgelöst wird.

Andere geeignete Sensoren für optische Eigenschaften können Helligkeitssensoren sein, die allgemein die Helligkeit eines vorzugsweise stark lichtreflektierenden Detektionsmaterials messen oder UV-Sensoren, die die UV-Reflektion von Detektionsmaterial messen, das beispielsweise mit optischen Aufhellern versehen ist. Erfindungsgemäß kann unter Umständen auf eine Lichtquelle und die Messung von Reflektionen verzichtet werden, wenn das Detektionsmaterial beispielsweise fluoreszierend ist und somit ein gewisses Eigenleuchten aufweist.

Ein induktiver Sensor kann die Änderung der Induktivität in einem definierten Bereich im Inneren des Kettengehäuses messen, die beispielsweise durch mitgenommenes metallisches Detektionsmaterial aus der Schnittschutzkleidung bewirkt werden. Der Sensor kann beispielsweise die Induktivität des motorseitigen Kettenrades messen. Erreicht mitgenommenes metallisches Material diesen Bereich, ändert sich die Induktivität und die Kettenbremse und/oder Abschaltung des Antriebs kann automatisch ausgelöst werden.

Ein kapazitiver Sensor kann beispielsweise die Kapazität zwischen dem motorseitigen Kettenrad und dem Sensor selbst messen. Wenn Detektionsmaterial mit bestimmten Dielektrizitätseigenschaften von der Kette mitgenommen wird und das Kettenrad erreicht, ändert sich diese Kapazität und die Kettenbremse kann ausgelöst werden.

Ein Leitfähigkeitssensor kann den elektrischen Widerstand beispielsweise zwischen dem Kettenrad und einer gegenüber dem Kettenrad isolierten Elektrode, die in geringem Abstand vom Kettenrad angeordnet ist, messen. Wird elektrisch leitfähiges Detektionsmaterial in die Kette eingezogen und erreicht das Kettenrad, kann dieses Material die Elektrode berühren und damit den gemessenen Widerstand deutlich verringern. Auch dies bewirkt dann die Auslösung der Kettenbremse.

Sämtliche Messungen können mit hoher Abtastrate erfolgen, um sehr schnell eine Detektion etwaig eingezogenen Detektionsmaterials zu ermöglichen.

Ein mechanischer Sensor zur Detektion der Mitnahme von Fasermaterial durch die Kette kann beispielsweise als ein kippbarer Stift ausgebildet sein, dessen kippbare Spitze in geringem Abstand von dem Kettenrad angeordnet ist. Wenn die laufende Kette beim Auftreffen auf die Schnittschutzausrüstung Fasermaterial mitnimmt, wird sich dies in der Kette und dem genannten Stift verwickeln und diesen in Laufrichtung der Kette verkippen. Dieses Verkippen löst die Kettenbremse aus.

Gegenstand der Erfindung ist ferner eine Schnittschutzkleidung mit wenigstens einer Schnittschutzschicht, die mechanische Verstärkungen zum Schutz vor Schnittwerkzeugen aufweist. Diese Schnittschutzschicht kann wie im Stand der Technik ausgebildet sein. Erfindungsgemäß weist die Schnittschutzausrüstung zusätzlich durch Einwirkung einer erfindungsgemäßen Kettensäge entfernbare Detektionselemente auf, die zur Detektion durch einen Sensor der Kettensäge ausgebildet sind.

Zweck der entfernbaren Detektionselemente ist weniger ein mechanischer Schutz gegen Schnitteinwirkung, im Gegenteil sollen diese Detektionselemente beim Auftreffen der laufenden Kette auf die Schnittschutzkleidung leicht und schnell ablösbar sein, so dass sie möglichst schnell von der Kette mitgenommen und durch den Sensor der erfindungsgemäßen Kettensäge detektiert werden können.

Die Schnittschutzkleidung, ist bevorzugt mehrschichtig. Dabei sind die Detektionselemente bevorzugt in einer Schicht oberhalb der Schnittschutzschicht (oder oberhalb einer von mehreren Schnittschutzschichten) angeordnet. Oberhalb bedeutet im Rahmen der Erfindung, dass sie relativ zur Schnittschutzschicht der Außenseite und damit der möglichen Einwirkrichtung einer auftreffenden Kettensäge zugewandt sind. Beim Auftreffen einer laufenden Kettensäge werden daher zunächst aus dieser Schicht oberhalb der Schnittschutzschicht Detektionselemente abgetragen und dem Sensor der Kettensäge zugeführt, anschließend trifft die laufende Kette auf die Schnittschutzschicht und wird zusätzlich mechanisch gebremst. Die Detektionselemente sind vorzugsweise leicht von der Schnittschutzschicht ablösbar, so dass sie sehr schnell nach einem Auftreffen einer laufenden Kettensäge von der Kette mitgenommen und den Sensoren zugeführt werden. Die Detektionselemente können bevorzugt faserförmig sein. Faserförmige Detektionselemente verfangen sich besonders leicht in der Kette und sind daher gut detektierbar.

Die Detektionselemente werden bevorzugt ausgewählt aus der Gruppe bestehend aus elektrisch leitfähigen Detektionselementen, farbigen Detektionselementen, fluoreszierenden Detektionselementen und Detektionselementen mit definierten Dielektrizitätseigenschaften.

Die als Schnittschutzkleidung ausgebildete Schnittschutzausrüstung weist vorzugsweise eine außenseitige Deckschicht zum Schutz vor Umgebungseinflüssen aus. Bei solchen Umgebungseinflüssen kann es sich um Wettereinwirkungen (beispielsweise Regen und Windschutz) sowie um mechanische Einwirkungen handeln, die beispielsweise beim Arbeiten in Dornengestrüpp auftreten. Diese äußere Deckschicht dient somit primär dem Wetterschutz und/oder dem Verschleißschutz bei dem bereits genannten Arbeiten im Dornengestrüpp.

Darunter ist eine Schicht mit Detektionselementen angeordnet. Trifft die Kettensäge auf die Schnittschutzausrüstung, wird diese nach dem Durchtrennen der Deckschicht abgetragen und dem Sensor der Kettensäge zugeführt. Unterhalb der Schicht mit Detektionselementen ist die aus dem Stand der Technik Schnittschutzschicht bzw. sind gegebenenfalls mehrere solcher Schichten angeordnet.

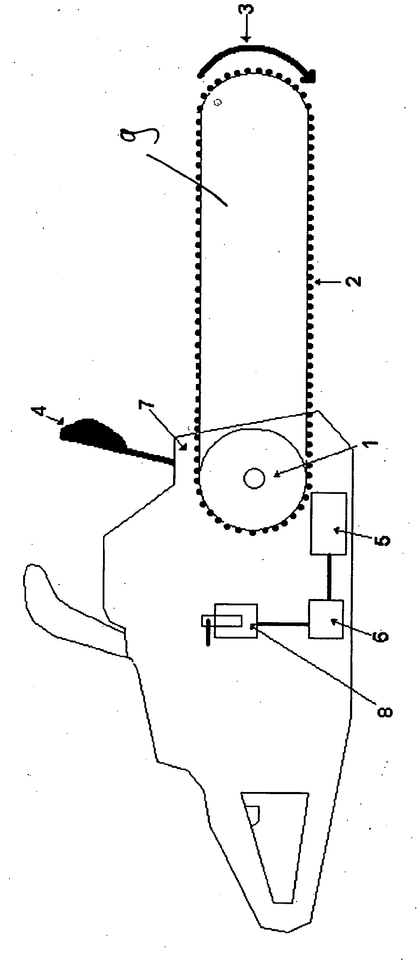

Ein Ausführungsbeispiel der Erfindung wird im folgenden anhand der Zeichnung beschrieben. Diese zeigt schematisch eine erfindungsgemäße Kettensäge.

Eine Kettensäge weist ein Gehäuse 7 und ein Kettenschwert 9 auf. Ein Kettenrad 1 wird von einem nicht dargestellten Motor angetrieben und treibt die auf dem Kettenschwert 9 laufende Sägekette 2 an.

In der Nähe des Kettenrades 1 ist eine Einheit 5 angeordnet, die eine UV-Lichtquelle (bevorzugt eine UV-LED) und einen Fotosensor enthält. Der Fotosensor weist eine spektrale Empfindlichkeit auf, die die Detektion sichtbaren Lichts erlaubt.

Eine Auswerte- und Steuereinheit 6 nimmt die Signale der Detektionseinheit 5 auf und steuert einen Auslösemechanismus 8 für die in der Zeichnung nicht dargestellte Kettenbremse an. Dieser Auslösemechanismus kann beispielsweise als Elektromagnet ausgebildet sein.

Im Normalbetrieb der Kettensäge strahlt die UV-LED UV-Licht in Richtung der auf dem Kettenrad 1 laufenden Kette 2 aus, das von der Kette und/oder mitgenommenen Schneidgutpartikeln ggf. teilweise auf den Fotosensor reflektiert wird. Es löst dort aufgrund der spektralen Empfindlichkeitsverteilung des Fotosensors (empfindlich für sichtbares Licht) kein über der Auslöseschwelle liegendes Signal aus.

Die Schutzkleidung des Benutzers ist mit einer erfindungsgemäßen Schnittschutzausrüstung versehen, die eine Schicht mit Detektionselementen aufweist. Diese Detektionselemente sind leicht von den darunter liegenden Schnittschutzschichten ablösbare Fasern, die aus einem fluoreszierenden Material herstellt oder auf andere weise mit fluoreszierenden Eigenschaften versehen sind. Trifft die laufende Kettensäge auf die Schnittschutzkleidung, löst die Kette 2 Detektionselemente in Form der fluoreszierenden Fasern ab und zieht diese in das Kettengehäuse 7 ein. Beim Vorbeilauf an der Detektionseinheit 5 trifft UV-Licht aus der UV-LED auf die fluoreszierenden Fasern aus, so dass diese in Folge ihrer Fluoreszenz sichtbares Licht emittieren. Die Fluoreszenz dieser Fasern ist so bemessen, dass die spektrale Verteilung des emmitierten sichtbaren Lichts innerhalb des spektralen Empfindlichkeitsbereich des verwendeten Fotosensors liegt. Die Fluoreszenz löst daher im Fotosensor ein über der Detektionsschwelle liegendes Signal aus, die Steuereinheit 6 löst jetzt den Elektromagneten 8 und damit die Kettenbremse aus, die die Kette 2 in kürzester Zeit zum Stillstand bringt. Zusätzlich kann eine Abschaltung der Antriebseinheit erfolgen, beispielsweise eine Zündabschaltung eines Benzinmotors.

## Patentansprüche

1. Kettensäge, mit einer Antriebseinrichtung für die Kette, **dadurch gekennzeichnet, dass** sie aufweist:
a. wenigstens einen Sensor (5), der zur unmittelbaren Detektion der Mitnahme von Detektionselementen der Schnittschutzkleidung des Benutzers durch die Kette (2) ausgebildet ist,
b. eine Einrichtung (6, 8) zum Stoppen der Antriebseinrichtung und/oder eine Kettenbremse, die durch den Sensor auslösbar ist.

2. Kettensäge nach Anspruch 1, **dadurch gekennzeichnet, dass** der Sensor (5) zur Detektion von mechanischen, elektrischen und/oder optischen Eigenschaften des durch die Kette (2) mitgenommenen Materials der Schnittschutzkleidung ausgebildet ist.

3. Kettensäge nach Anspruch 1 oder 2, **dadurch gekennzeichnet, dass** der Sensor (5) ausgewählt ist aus der Gruppe bestehend aus Farbsensoren, Helligkeitssensoren, UV-Sensoren, Induktivitätssensoren, Kapazitätssensoren, Leitfähigkeitssensoren und mechanischen Sensoren zur Detektion der Mitnahme von Fasermaterial durch die Kette (2).

4. Schnittschutzkleidung, mit wenigstens einer Schnittschutzschicht, die mechanische Verstärkungen zum Schutz vor Schnittwerkzeugen aufweist, **dadurch gekennzeichnet, dass** die Schnittschutzkleidung zusätzlich durch Einwirkung einer Kettensäge nach einem der Ansprüche 1 bis 3 entfernbare Detektionselemente aufweist, die zur Detektion durch den Sensor (5) der Kettensäge ausgebildet sind, wobei die Detektionselemente ausgewählt sind aus der Gruppe bestehend aus:
a. elektrisch leitfähige Detektionselemente,
b. farbige Detektionselemente,
c. fluoreszierende Detektionselemente,
d. Detektionselemente mit definierten Dielektrizitätseigenschaften.

5. Schnittschutzkleidung nach Anspruch 4, **dadurch gekennzeichnet, dass** die Schnittschutzkleidung mehrschichtig ist, und dass die Detektionselemente in einer Schicht oberhalb einer Schnittschutzschicht angeordnet sind.

6. Schnittschutzausrüstung nach Anspruch 4 oder 5, **dadurch gekennzeichnet, dass** die Detektionselemente leicht von der Schnittschutzschicht ablösbar sind.

7. Schnittschutzkleidung nach einem der Ansprüche 4 bis 6, **dadurch gekennzeichnet, dass** die Detektionselemente faserförmig sind.

8. Schnittschutzkleidung nach einem der Ansprüche 4 bis 7, **dadurch gekennzeichnet, dass** sie aufweist:
a. eine Deckschicht zum Schutz vor Umgebungseinflüssen,
b. eine Schicht mit Detektionselementen,
c. eine Schnittschutzschicht.

## Claims

1. A chain saw, with a drive device for the chain, **characterised in that** it has:
a. at least one sensor (5) which is designed for the immediate detection by detection elements of the user's cut-protection clothing being caught by the chain (2),
b. a device (6,8) for stopping the drive device and/or a chain brake, which can be triggered by the sensor.

2. A chain saw according to Claim 1, **characterised in that** the sensor (5) is designed to detect mechanical, electrical and/or optical properties of the material of the cut-protection clothing caught by the chain (2).

3. A chain saw according to Claim 1 or Claim 2, **characterised in that** the sensor (5) is chosen from a group comprising colour sensors, brightness sensors, UV sensors, inductance sensors, capacitance sensors, conductivity sensors and mechanical sensors for the detection of the catching of fibrous material by the chain (2).

4. Cut-protection clothing, with at least one cut-protection layer which has mechanical reinforcements for protection from cutting implements, **characterised in that** the cut-protection clothing additionally has detection elements which can be removed by the action of a chain saw according to any one of Claims 1 to 3, and which are designed for detection by the sensor (5) of the chain saw, wherein the detection elements are chosen from a group comprising:
a. electrically conductive detection elements,
b. colour detection elements,
c. fluorescing detection elements,
d. detection elements with defined dielectric properties.

5. Cut-protection clothing according to Claim 4, **characterised in that** the cut-protection clothing is multilayered, and **in that** the detection elements are disposed in a layer above a cut-protection layer.

6. Cut-protection clothing according to Claim 4 or 5, **characterised in that** the detection elements are readily detachable from the cut-protection layer.

7. Cut-protection clothing according to any one of Claims 4 to 6, **characterised in that** the detection elements are fibrous.

8. Cut-protection clothing according to any one of Claims 4 to 7, **characterised in that** it has:
a. an outer layer for protection from environmental influences,
b. a layer with detection elements,
c. a cut-protection layer.

## Revendications

1. Scie à chaîne, comportant un dispositif d'entraînement pour la chaîne, **caractérisée en ce qu'**elle comporte :
a. au moins un capteur (5), qui est réalisé pour la détection immédiate de l'entraînement par la chaîne (2) d'éléments de détection des vêtements de protection anti-coupure de l'utilisateur,
b. un dispositif (6, 8) destiné à arrêter le dispositif d'entraînement et/ou un frein de chaîne qui peut être actionné par le capteur.

2. Scie à chaîne selon la revendication 1, **caractérisée en ce que** le capteur (5) est réalisé pour détecter des propriétés mécaniques, électriques et/ou optiques du matériau du vêtement de protection anti-coupure entraîné par la chaîne (2).

3. Scie à chaîne selon la revendication 1 ou 2, **caractérisée en ce que** le capteur (5) est choisi dans le groupe formé par des capteurs de couleur, des capteurs de luminosité, des capteurs UV, des capteurs inductifs, des capteurs capacitifs, des capteurs de conductivité, et des capteurs mécaniques pour la détection de l'entraînement d'un matériau à fibres par la chaîne (2).

4. Vêtement de protection anti-coupure, comportant au moins une couche de protection anti-coupure, qui contient des renforts mécaniques destinés à protéger contre les outils de coupe, **caractérisé en ce que** le vêtement de protection anti-coupure comporte, en plus, des éléments de détection amovibles, qui réagissent à l'influence d'une scie à chaîne selon l'une quelconque des revendications 1 à 3 et qui sont réalisés pour la détection par le capteur (5) de la scie à chaîne, lesdits éléments de détection étant choisis dans le groupe formé par :
a. des éléments de détection électroconducteurs,
b. des éléments de détection en couleur,
c. des éléments de détection fluorescents,
d. des éléments de détection avec des propriétés diélectriques définies.

5. Vêtement de protection anti-coupure selon la revendication 4, **caractérisé en ce que** le vêtement de protection anti-coupure est un vêtement multicouche, et **en ce que** les éléments de détection sont agencés dans une couche au-dessus d'une couche de protection anti-coupure.

6. Vêtement de protection anti-coupure selon la revendication 4 ou 5, **caractérisé en ce que** les éléments de détection peuvent être aisément détachés de la couche de protection anti-coupure.

7. Vêtement de protection anti-coupure selon l'une quelconque des revendications 4 à 6, **caractérisé en ce que** les éléments de détection sont en forme de fibres.

8. Vêtement de protection anti-coupure selon l'une quelconque des revendications 4 à 7, **caractérisé en ce qu'**il comporte :
a. une couche de recouvrement pour la protection contre les influences de l'environnement,
b. une couche avec des éléments de détection,
c. une couche de protection anti-coupure.
